# FASCICULE DE BREVET EUROPEEN

(11) **EP 2 936 653 B1**
(45) Date de publication et mention de la délivrance du brevet: **01.09.2021**
(21) Numéro de dépôt: 13831858.9
(22) Date de dépôt: 13.12.2013
(51) Int. Cl.: H02K 21/04, H02K 1/24

(54) **ROTOR A GRIFFES A DIMINUTION DE SECTION ET ALTERNATEUR POUR UN VEHICULE COMPRENANT UN TEL ROTOR**
KLAUENPOLROTOR MIT VERRINGERTEM KLAUENPOLQUERSCHNITT UND GENERATOR FÜR EIN FAHRZEUG MIT EINEM DERARTIGEN ROTOR
LUNDELL ROTOR COMPRISING CLAWS WITH A REDUCED CROSS-SECTION AND ALTERNATOR FOR A VEHICLE COMPRISING SUCH A ROTOR

(30) Priorité: 19.12.2012 FR 1262285
(43) Date de publication de la demande: 28.10.2015
(73) Titulaire: Valeo Equipements Electriques Moteur, 94046 Créteil Cedex (FR)
(72) Inventeur: DELIANNE, Henri, F-62630 Maresville (FR); BILTERYST, Pierre-Yves, F-62170 Brimeux (FR)
(74) Mandataire: Ricard, Amandine
(86) Numéro de dépôt international: PCT/FR2013/053072
(87) Numéro de publication internationale: WO 2014/096642

(56) Documents cités:
- EP-A1- 0 515 259
- EP-A2- 1 122 858
- EP-A2- 2 006 978
- DE-A1- 10 153 578
- US-A1- 2006 290 232
- US-A1- 2007 278 895
- US-A1- 2009 189 472
- None

## Description

### Domaine de l'invention

La présente invention concerne de manière générale les machines électriques tournantes.

Plus précisément, l'invention concerne notamment des machines tournantes de type alternateur ou alterno-démarreur, mises en œuvre dans les véhicules automobiles.

Et plus précisément encore, l'invention concerne les machines tournantes dont le rotor à griffes comprend des aimants, par exemple des aimants permanents comme des aimants en terres rares et/ou en ferrite.

### Etat de la technique

Le rotor a une structure à griffes comprenant des ensembles magnétiques et un bobinage d'excitation annulaire placé autour de l'arbre de rotation de la machine. Le rotor est constitué de deux roues polaires comprenant chacune des griffes dont chacune s'insère entre deux griffes de la roue polaire opposée. Lorsque le bobinage d'excitation est alimenté électriquement les roues polaires, avantageusement en matériau ferromagnétique, sont magnétisées et il est crée ainsi des pôles sud au niveau des griffes de l'une des roues polaire et des pôles Nord au niveau des griffes de l'autre roue polaire.

Les ensembles magnétiques comportent au moins un aimant permanent et sont disposés entre deux griffes. Ils servent notamment à empêcher les fuites du flux magnétique entre les pôles magnétiques en forme de griffe. Il a en effet été constaté qu'une partie importante du flux magnétique créé par le bobinage du rotor passait par des chemins de fuite au lieu de traverser l'entrefer de la machine et d'aller provoquer l'induction désirée dans les pôles du stator. A cet effet, des solutions de l'art antérieur prévoient que des aimants soient placés par paire entre au moins certaines des griffes consécutives des roues polaires soit par des agrafes ou autre, soit grâce à deux rainures réalisées sur un des bords latéraux des griffes entre lesquelles l'aimant est situé. Dans le second cas, les aimants doivent remplir tout l'espace interpolaire, ce qui augmente le coût de la machine car ces aimants sont chers.

Dans le domaine, on connaît déjà un rotor de machine électrique tournante qui comporte deux roues polaires comportant une série de griffes d'orientation axiale de forme globalement trapézoïdale qui s'étendent axialement depuis une saillie radiale du bord d'extrémité radiale externe de ladite roue polaire, en direction de l'autre roue polaire, de manière que chaque griffe d'une roue polaire est située dans l'espace existant entre deux griffes consécutives de l'autre roue polaire, et qui comporte au moins un ensemble magnétique doté d'au moins un aimant interpolaire dans l'espace interpolaire défini entre une première griffe d'une première roue polaire et une seconde griffe d'une seconde roue polaire, ledit aimant comprenant latéralement deux premières faces délimités par des première et seconde extrémités libres, lesdites deux premières faces s'étendant respectivement le long des première et seconde griffes ; chacune des première et seconde griffes présentant une extrémité de tête et une face latérale de sorte que la face latérale adjacente est en regard, ladite face latérale comprenant des troisième et quatrième extrémités opposées entre lesquelles l'aimant est en contact.

Un tel rotor de machine électrique tournante est divulgué dans FR 2 793085.

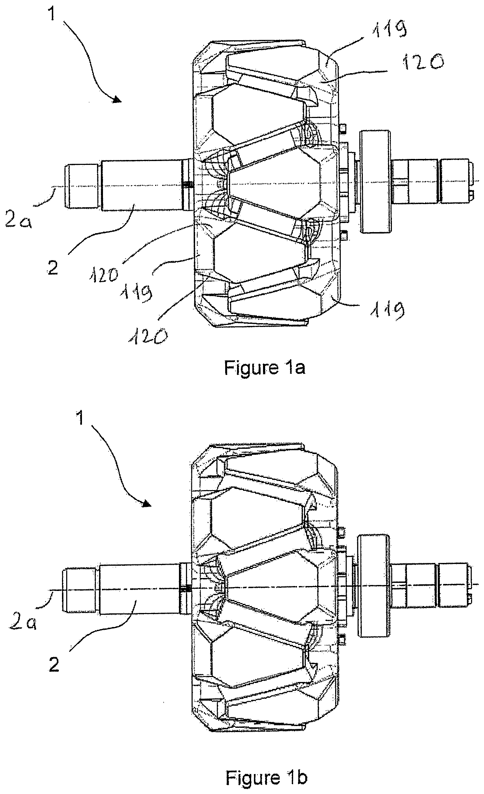

Dans un tel rotor, il a été constaté qu'une partie du flux magnétique créé par le bobinage du rotor passait par des chemins de fuite au lieu de traverser l'entrefer défini entre la périphérie externe du rotor et la périphérie interne du stator de la machine électrique. Plus précisément, comme montré sur la figure 1a montrant un rotor de l'art antérieur, l'ensemble magnétique est agencé par rapport aux première et seconde griffes de sorte que l'une des deux extrémités libres dudit ensemble magnétique est en retrait par rapport à l'extrémité de tête d'une des deux griffes. Par ailleurs, les faces latérales de chacune des première et seconde griffes définissent une section diminuant linéairement quelque soit la proximité de l'aimant qui leur est adjacent.

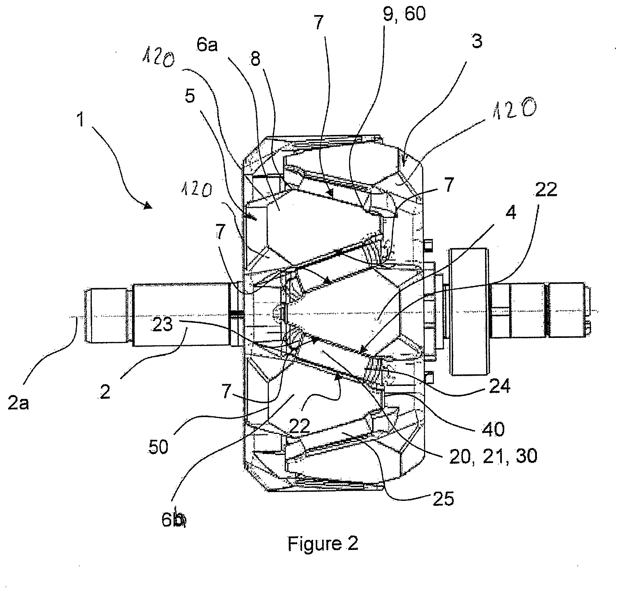

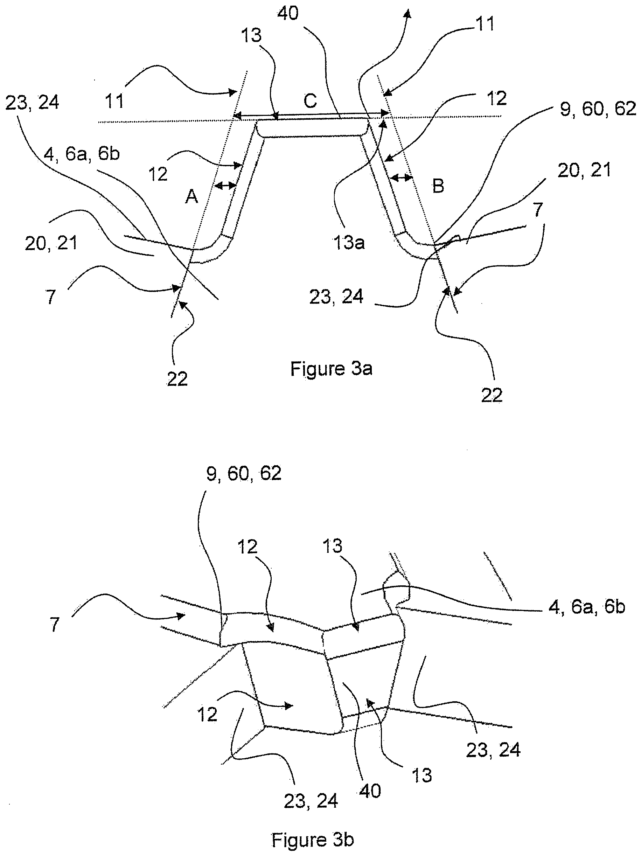

Comme représenté sur la figure 1a dans laquelle la référence 1 désigne le rotor à griffes et la référence 2 l'arbre du rotor, ces fuites de flux magnétiques ont lieu à l'endroit de l'espace interpolaire, au voisinage de l'extrémité libre de l'ensemble magnétique, qui est en retrait par rapport à l'extrémité de tête, ou extrémité libre, de l'une des deux griffes. Les fuites sont principalement dues au fait qu'une partie de l'espace interpolaire est laissé libre, mettant alors directement en regard les faces latérales des première et seconde griffes. Par ailleurs, la géométrie de l'extrémité de tête, au voisinage de l'ensemble magnétique, favorise également ces fuites de flux magnétique, du fait que la face latérale, à l'endroit de l'extrémité de tête, est proche de l'ensemble magnétique et de l'autre griffe qui lui est en regard. Dans cette figure 1a on voit en 119 les chanfreins de raccordement du pied de la griffe d'orientation axiale (non référencée) à la saillie radiale (non référencée) issue du bord du flasque de la roue polaire concernée. Les griffes d'orientation axiale forment avec leur saillie radiale associée des griffes proprement dites, les espaces entre les saillies radiales étant globalement en forme de V à sommet plat. Pour plus de précision on se reportera au document FR 2 676 873, notamment aux figures 2 et 3 de celui-ci. Les roues polaires étant similaire à celles de ce document FR 2 676 873, on a référencé en 120 les chanfreins anti bruit chaque roue polaire au niveau du chanfrein 119.

Afin de remédier à ces fuites, d'autres solutions de l'art antérieur, comme représenté à la figure 1b, proposent une solution dans laquelle l'ensemble magnétique remplit intégralement l'espace interpolaire. Une telle solution est satisfaisante pour éviter les fuites de flux magnétiques, mais n'est pas satisfaisante d'un point de vue économique.

Dans un contexte industriel concurrentiel, il est important que les solutions techniques soient les plus économiques possibles. Or, l'ensemble magnétique comprenant un aimant interpolaire est un objet fabriqué dans un matériau de plus en plus onéreux, d'autant plus qu'il s'agit généralement d'un aimant en terre rares dont le coût est en constante augmentation. Dans ces conditions, il apparaît nécessaire, afin de limiter les couts, de limiter la taille des aimants.

### Objet de l'invention

Dans ce contexte, le problème ici posé est de proposer un rotor de machine électrique tournante, qui soit de construction simple et permettant, en phase de fonctionnement du rotor, de limiter les fuites de flux magnétiques tout en proposant un rotor avantageux économiquement.

La solution proposée par la présente invention est caractérisée en ce que lesdites faces latérales de chacune des première et seconde griffes définissent une diminution de section à partir d'une des extrémités libres dudit ensemble magnétique pour se développer vers une extrémité de tête de la griffe suivant une facette latérale.

Un tel rotor permet de pallier aux inconvénients précités.

La présente solution offre un bon compromis. Elle permet en effet de minimiser les chemins de fuite entre les extrémités de tête des première et seconde roues polaires et de diminuer les coûts en réduisant la taille des aimants interpolaires.

La diminution de section, a priori non linéaire, de chacune des première et seconde griffes, à partir d'une des extrémités de l'aimant influence favorablement le chemin emprunté par les lignes de champ magnétique.

L'ensemble magnétique disposé dans l'espace interpolaire a pour fonction de guider les lignes de champ dans l'entrefer, entre les première et seconde griffes. Ces lignes, reliant les pôles magnétiques définis par les roues polaires, sont portées par des droites parallèles et de même écart lorsqu'elles passent dans l'aimant interpolaire. Au voisinage des extrémités libres de l'ensemble magnétique, des chemins de fuite existants sont influencés par la forme définie par chacune des griffes.

En diminuant la section des première et seconde griffes à partir des extrémités libres de l'ensemble magnétique, les lignes de champ existant entre les première et seconde griffes et définissant des chemins de fuite, vont s'allonger ; elles définissent alors, a priori, des trajectoires curvilignes qui devraient présenter un rayon de courbure relativement plus faible, allongeant alors le chemin magnétique devant être parcouru depuis une roue polaire vers l'autre roue polaire.

Les lignes de champ au lieu de suivre ces lignes de champ susmentionnées vont alors suivre, en suivant les règles du magnétisme, un chemin magnétique plus court passant par l'ensemble magnétique disposé dans l'espace interpolaire. Ainsi, les flux magnétiques qui seraient dissipés dans l'air au voisinage des extrémités de l'ensemble magnétique en suivant les solutions décrits dans l'état de l'art, sont alors conservés avantageusement en modifiant leur trajectoire via la forme des première et deuxième griffes.

Cette diminution des pertes permet en conséquence d'augmenter le rendement de la machine électrique tournante. A titre d'exemple, un alternateur de véhicule automobile équipé d'un tel rotor propose un rendement supérieur et produit alors davantage de courant.

La facette latérale se développe vers l'extrémité de tête parallèlement à la face latérale.

L'agencement d'une facette latérale parallèle à la face latérale permet une réalisation aisée, puisque pouvant être réalisé par les mêmes outils et donc d'apporter des coûts de fabrication optimisés.

Dans un mode de réalisation, le rotor comporte en outre un second ensemble magnétique dans l'espace interpolaire défini entre la première griffe et une troisième griffe, lesdites deuxième et troisième griffes étant deux griffes consécutives de la seconde roue polaire.

L'agencement d'un second ensemble magnétique permet de limiter les chemins de fuite du flux magnétique l'autre côté de la première griffe, du côté de la troisième griffe. De cette manière, les pertes de flux magnétiques entre cette première griffe et la seconde roue polaire sont réduites avantageusement.

Dans un autre mode de réalisation de l'invention, les deux facettes latérales d'une même griffe sont raccordées par une facette terminale de sorte que l'extrémité de tête de cette griffe définisse une forme sensiblement symétrique.

Le caractère symétrique de la tête de griffe permet une coopération plus simple entre les première et seconde griffes et en conséquence de simplifier la conception et l'industrialisation d'un tel rotor.

Dans un autre mode de réalisation de l'invention, la diminution de section définit un épaulement droit séparant la facette latérale de la face latérale.

L'agencement d'un épaulement droit entre la facette latérale et la face latérale permet avantageusement de diminuer la section à partir d'une des extrémités libres de l'ensemble magnétique. Un tel épaulement droit a principalement pour avantage d'être simple à réaliser et donc de proposer un mode de fabrication peu onéreux de réduction de section de la griffe.

Dans encore un autre mode de réalisation de l'invention, la diminution de section définit un congé de raccordement arrondi entre la facette latérale et la face latérale.

Le congé de raccordement arrondi permet de moduler la forme de la griffe en fonction, par exemple, de la forme de l'ensemble magnétique ou de la griffe qui lui est adjacente. Le congé de raccordement pourra varier notamment via son rayon de courbure.

Selon une autre variante, pour une même griffe :
- des prolongements de contour des faces latérales définissent chacun avec le contour de la facette latérale qui lui est directement en regard, deux écarts métriques (A, B) ;
- lesdits prolongements de contour des faces latérales se raccorde suivant une face terminale virtuelle de largeur métrique C se confondant en partie avec le contour de ladite facette terminale ;
- la somme des deux écarts métriques (A, B) est environ équivalente à un taux (T1) compris entre 15 et 45 % de la valeur de ladite largeur C.

L'ensemble de ces caractéristiques numériques offrent un excellent compromis entre la diminution des pertes de flux magnétique et l'économie de matière relative à la réduction de la taille des ensembles magnétiques, notamment lorsqu'il s'agit d'un congé de raccordement arrondi.

Selon une autre variante, la longueur d'une facette latérale est environ équivalente à un taux (T2) compris entre 15 et 45 % d'une longueur de la griffe, définie entre l'extrémité de tête et la base de la griffe et mesurée suivant la direction définie par la facette latérale.

L'ensemble de ces caractéristiques numériques offrent également un excellent compromis entre la diminution des pertes de flux magnétique et l'économie de matière relative à la réduction de la taille des aimants, notamment lorsqu'il s'agit d'un épaulement droit.

Dans un autre mode de réalisation de l'invention, le taux (T1) est sensiblement égal à 30 %.

Dans un autre mode de réalisation de l'invention, le taux (T2) est sensiblement égal à 30 %.

Dans un autre mode de réalisation de l'invention, l'ensemble magnétique comprend un aimant en matière terres rares.

Les aimants en terres rares sont ceux qui présentent les propriétés magnétiques les plus puissantes. Il est particulièrement avantageux d'utiliser une telle matière afin de minimiser au mieux les pertes de flux magnétiques.

Suivant un second objet de l'invention, est également visé un alternateur, notamment de véhicule automobile, équipé d'un rotor de machine électrique tournante tel que défini précédemment.

Equipé d'un tel rotor, l'alternateur présente un meilleur rendement et produit en conséquence davantage d'intensité de courant. En outre l'extrémité de tête d'une griffe d'une des roues polaires peut être prolongée axialement en direction du flasque de l'autre roue polaire, voir même pénétrer en partie dans l'espace délimité par les deux saillies radiales concernées de l'autre roue polaire du fait que l'on diminue les fuites magnétiques.

Toutes les caractéristiques mentionnées ci-dessus sont à considérer seules ou en combinaison.

D'autres caractéristiques et avantages ressortiront encore de la description qui est faite ci-après, à titre indicatif et nullement limitatif, en référence aux dessins annexés.

### Description des dessins:

- la figure 1a montre un rotor de l'art antérieur dans lequel les faces latérales de chacune des première et seconde définissent une section diminuant linéairement quelque soit la proximité de l'aimant qui leur est adjacent ;
- la figure 1b montre un autre rotor de l'art antérieur dans lequel l'aimant interpolaire remplit intégralement l'espace interpolaire ;
- la figure 2 montre une vue de côté d'un exemple de rotor conforme à la présente invention ;
- la figure 3a montre un exemple de griffe conforme à la présente invention dans lequel la diminution de section définit un congé de raccordement arrondi entre la facette latérale et la face latérale ;
- la figure 3b montre sensiblement les mêmes détails que la figure 3a, en vue de perspective ;
- la figure 4a montre un exemple de griffe conforme à la présente invention dans lequel la diminution de section définit un épaulement droit séparant la facette latérale de la face latérale ;
- la figure 4b montre sensiblement les mêmes détails que la figure 4a, en vue de perspective.

### Descriptions d'exemples de réalisation

Dans le présent mode de réalisation de la figure 2 selon l'invention, l'alternateur ou l'alterno-démarreur de véhicule automobile comporte un carter et un stator classiques non illustrés et un rotor 1 à griffes ayant un arbre 2 d'axe 2a. De façon connue en soi, le rotor 1 comporte un enroulement ou bobinage (non illustrés) dont des fils sont supportés et positionnés par des cabestans au niveau d'un tronçon de fil faisant saillie du bobinage et relié par ailleurs à un collecteur non illustré de l'alternateur. Pour plus de précisions on se reportera par exemple au document FR 2 676 873 divulguant à la figure 1 la structure complète de l'alternateur, ici à ventilation interne, et également à la figure 1 du document FR 2 793 085 montrant le bobinage d'excitation du rotor. Dans les figures 1 à 3 on a représenté à l'arrière les deux bagues collectrices du collecteur ainsi que le roulement à billes de montage à rotation de l'arbre du rotor ; ledit roulement étant monté dans un logement du flasque arrière, appelé également palier arrière, que comporte le carter.

Dans la description les orientations radial, transversale et radiale seront faites en référence à l'axe 2a de l'arbre 2.

Le rotor 1 de la figure 2 comporte deux roues polaires, de préférence en matériau ferromagnétique. Chaque roue polaire comprend un flasque d'orientation transversale par rapport à l'axe 2a et une série de griffes implantées à la périphérie externe du flasque concernée. Les griffes comportent, de manière connue, une partie d'orientation radiale et une partie d'orientation axiale. La partie radiale s'étend en saillie radiale par rapport au bord du flasque concerné, c'est-à-dire par rapport à la périphérie externe du flasque concerné. Le flasque est globalement d'orientation transversale. La partie d'orientation axiale des griffes est en forme de dent de forme globalement trapézoïdale. Chaque dent, et donc chaque griffe, s'étend axialement par rapport à l'axe 2a depuis la saillie radiale issue du bord d'extrémité radiale externe du flasque de ladite roue polaire, en direction de l'autre roue polaire, de manière que chaque griffe d'une roue polaire est située dans l'espace 30 existant entre deux griffes consécutives de l'autre roue polaire. La périphérie externe des dents (et donc des griffes) délimite la périphérie externe du rotor et l'entrefer entre le rotor et le stator. L'épaisseur de la partie axiale d'une griffe est décroissante. L'épaisseur de la partie axiale de la griffe est maximale au niveau de son extrémité de pied, appartenant à sa zone d'enracinement à sa partie axiale, et minimale au niveau de son extrémité de tête constituant son extrémité libre. Un noyau est intercalé entre les deux roues polaires. Ce noyau porte le bobinage d'excitation du rotor, qui lorsqu'il est parcouru par un courant permet de polariser les roues polaires, l'une des roues présentant alors des pôles Nord et l'autre des pôles Sud. Pour plus de précisions on se reportera aux figures 2 et 3 du document FR 2 676 873 précité, montrant en perspective et en bout l'une des roues polaire et l'espace entre deux griffes d'une même roue polaire, et au document FR 2 793 085 montrant le noyau du rotor à griffes. De manière connue ce noyau peut être distinct des roues polaires ou en variante, comme décrit dans le document FR 2 256 572, en deux parties solidaires chacune de l'une des roues polaires. Dans le mode de réalisation de la figure 2 les dents présentent des chanfreins anti-bruit (référencés en 120) au niveau de leur pied d'extrémité comme dans le document FR 2 676 873. Elles ont la même forme que celle des figures 1a et 1b.

Ainsi le rotor 1 comprend une première roue 3 polaire et une seconde roue 5 polaire ayant chacune plusieurs griffes. La première roue 3 polaire comprend une première série de griffes présentant chacune à leur périphérie externe une dent 4 d'orientation axiale et la seconde roue 5 polaire comprend une seconde série de griffes présentant chacune à leur périphérie externe une dent 6a d'orientation axiale. Chacune des première et seconde dents 4, 6a, et donc chaque première et seconde griffe 4, 6a, présente au moins deux faces latérales 7 opposées, de préférence deux faces latérales 7 opposées. Chacune des première et seconde dents 4, 6a présente une (parmi les au moins deux) face latérale de sorte que la face latérale 7 adjacente de l'autre dent de l'autre griffe est en regard. La face latérale 7 comprend des troisième et quatrième extrémités 8, 9 opposées entre lesquelles un ensemble magnétique 20 est typiquement en contact. La quatrième extrémité 9 est la plus proche de l'extrémité libre, ou tête, de la griffe 4, 6a concernée, tandis que la troisième extrémité 8 est la plus proche du flasque de la roue polaire concernée. Dans ce mode de réalisation la troisième extrémité 8 est délimitée globalement par un chanfrein anti bruit 120 et appartient à l'extrémité de pied de la griffe.

L'ensemble magnétique 20, comprenant au moins un aimant permanent 21 interpolaire, est placé circonférentiellement entre une première et une seconde dent 4, 6a. L'ensemble magnétique 20 peut en outre comprendre un autre aimant et/ou un élément magnétique (non illustré) qui peut être de la même matière que les roues polaires ou en acier comme décrit par exemple comme décrit dans le document FR 2 918 220 auquel on se reportera.

L'aimant pourra être en outre associé à une laminette collé sur l'aimant comme décrit dans le document FR 2 784 248 auquel on se reportera.
- Bien entendu l'ensemble magnétique 20 pourra comporter au moins un aimant, au moins une cale de support réalisée en un matériau non magnétique et qui est montée sur une face d'extrémité transversale de l'aimant, et des moyens de liaison avec la cale comme décrit dans le document FR 2 895 165 auquel on se reportera.

Préférentiellement, afin de monter l'ensemble magnétique 20 sur les griffes, il est prévu d'agencer des rainures sur les côtés ( les faces latérales) des griffes. Une procédure de montage d'un tel ensemble magnétique 20, entre ces première et seconde griffes 4, 6a, est par exemple décrite dans les demandes FR 2 784 248, FR2 918 220 et FR 2 895 165. Bien entendu l'épaisseur de la partie axiale d'une griffe est fonction de l'épaisseur de l'ensemble magnétique 20.

L'ensemble magnétique 20 présente une forme sensiblement parallélépipédique, mais il est envisageable que cette forme soit adaptée en fonction de la conformation de l'espace 30 interpolaire défini entre les première et seconde griffes 4, 6a. L'ensemble magnétique 20 présente, a priori, un aspect homogène avec des faces sensiblement planes.

Dans un mode de réalisation, l'ensemble magnétique 20 est compris dans l'espace 30 interpolaire défini entre la première griffe 4 de la première roue 3 polaire et la seconde griffe 6a de la seconde roue 5 polaire. L'ensemble magnétique 20 comprend alors latéralement deux premières faces 22 (de préférence opposées) délimités par des première et seconde extrémités 23, 24 libres. Est entendu par extrémité libre, une extrémité qui n'est pas en contact avec l'une ou l'autre des griffes. Les deux premières faces 22 de l'ensemble magnétique 20 s'étendent respectivement le long des première et seconde griffes 4, 6a, de préférence en regard des faces latérales des griffes.

Sur la figure 2, on voit que l'ensemble magnétique 20 est placé entre les première et seconde griffes 4, 6a de sorte qu'il ne fasse pas saillie par rapport aux troisième et quatrième extrémités 8, 9 des faces latérales 7 de chacune des griffes 4, 6a. A titre d'exemple, la taille de l'ensemble magnétique 20 est ainsi réduite par rapport à l'ensemble magnétique représenté sur la figure 1b.

Il est ainsi prévu que les faces latérales de chacune des première et seconde griffes 4, 6a définissent une diminution de section 60 à partir d'une des extrémités 23, 24 libres dudit ensemble magnétique 20 pour se développer vers une extrémité de tête, ou extrémité libre, de griffe 40 suivant une facette latérale 12. En d'autres termes, chacune des première et seconde griffes 4, 6a définit une diminution section à partir d'une des extrémités 23, 24 libres de l'ensemble magnétique 20 (notamment de son aimant 20) pour ensuite s'étendre vers une extrémité de tête de la griffe 40 suivant une facette latérale 12. Il convient également de préciser que compte tenu de la forme généralement trapézoïdale de la griffe - suivant la vue montrée sur la figure 2 - on entend « par diminution de section à partir d'une des extrémités 23, 24 libres de l'ensemble magnétique 20 », le fait que, comme montrée sur la figure 2, la section de la griffe définisse une réduction de section non linéaire à partir de l'extrémité libre de l'ensemble magnétique 20. Cette réduction de section non linéaire définit, a priori, une discontinuité de section. Ainsi l'une des extrémités libres d'un ensemble magnétique 20 s'étend axialement en retrait par rapport à la tête de la griffe 4, tandis que l'autre extrémité libre d'un ensemble magnétique s'étend axialement en retrait par rapport à la tête de la griffe 6a. La longueur d'un ensemble magnétique 20 est ainsi réduite.

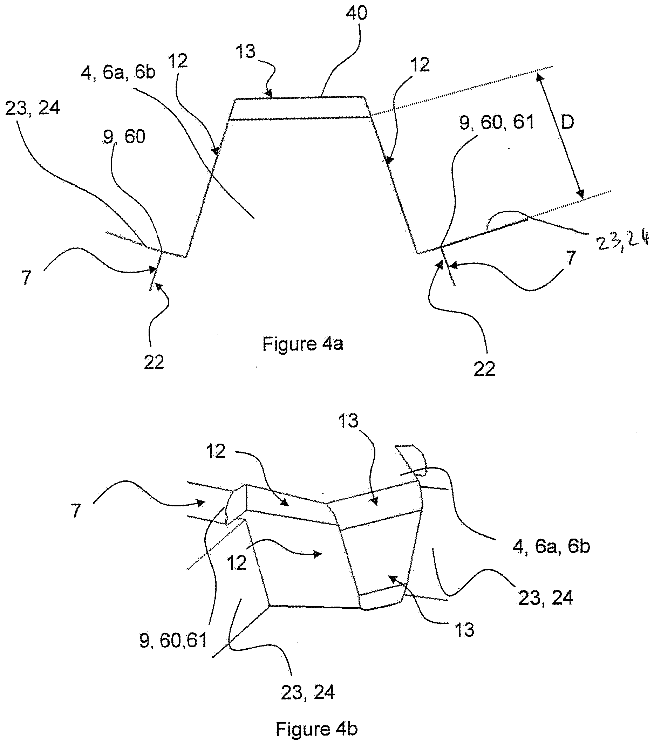

Selon un premier mode de réalisation montré sur les figures 4a et 4b, la diminution de section 60 définit un épaulement droit 61 séparant la facette latérale 12 de la face latérale 7.

Selon un deuxième mode de réalisation montré sur les figures 3a et 3b, la diminution de section 60 définit un congé de raccordement 62 arrondi entre la facette latérale 12 et la face latérale 7.

Selon un mode de réalisation, l'ensemble magnétique 20 comprenant l'aimant 21 est logé dans l'espace 30 interpolaire entre les première et seconde griffes 4, 6a et est reçu par ses premières faces 22 dans des rainures prévues sur les faces latérales de chacune des griffes qui sont en regard. Le document FR 2 793 085 montre par exemple un procédé de montage de l'ensemble magnétique 21 dans l'espace 30 interpolaire, ce procédé étant réalisé à l'aide d'une fraise pour créer les rainures, qui entaillent en partie la partie radiale des griffes.

Selon un autre mode de réalisation montré sur la figure 2, le rotor 1 comporte en outre un second ensemble magnétique 25 interpolaire dans l'espace 30 interpolaire défini entre la première griffe 4 et une troisième griffe 6b de la roue polaire 5. Les deuxième et troisième griffe 6a, 6b sont deux griffes consécutives équipant la même seconde roue 5 polaire.

Il est ainsi formé une paire d'ensemble magnétique 20, 25.

Le nombre de paires d'ensemble magnétique 20, 25 peut être inférieure ou égal au nombre de paire de pôles des roues polaires.

Par suite, l'homme du métier peut agencer des ensembles magnétiques du même type que ceux précités de manière à ce qu'une série d'ensemble magnétique soit disposée entre chaque espace 30 interpolaire défini entre la série de premières griffes 4 et la série de seconde griffes 6a.

Selon des exemples de modes de réalisation montrés sur les figures 3a, 3b, 4a et 4b, il est prévu que les deux facettes latérales d'une même griffe soient raccordées par une facette terminale 13 de sorte que l'extrémité de tête 40 de griffe définisse une forme sensiblement symétrique.

Selon des exemples de modes de réalisation montrés sur les figures 3a, 3b, 4a et 4b, la facette latérale 12 se développe vers l'extrémité de tête 30 parallèlement à la face latérale 7.

Comme illustré sur les figures 3a et 3b, pour une même griffe, il peut être prévu que :
- des prolongements 11 de contour des faces latérales définissent chacun avec le contour de la facette latérale 12 qui lui est directement en regard, deux écarts métriques (A, B) ;
- lesdits prolongements 11 de contour des faces latérales se raccorde suivant une face terminale virtuelle 13a de largeur métrique C se confondant en partie avec le contour de ladite facette terminale 13 ;
- la somme des deux écarts métriques (A, B) est environ équivalente à un taux (T1) compris entre 15 et 45 % de la valeur de ladite largeur C.

De préférence, le taux (T1) est sensiblement égal à 30%.

Dans un autre mode de réalisation montré par exemple sur les figures 4a et 4b, la longueur d'une facette latérale 12 est environ équivalente à un taux (T2) compris entre 15 et 45 % d'une longueur de la griffe 4, 6a, définie entre l'extrémité de tête 40 et la base 50 et mesurée suivant la direction définie par la facette latérale 12. De préférence, le taux (T2) est sensiblement égal à 30%.

Dans un mode de réalisation, l'ensemble magnétique 20 comporte au moins un aimant permanent en ferrite 21.

Dans un autre mode de réalisation, l'ensemble magnétique 20 est en comporte au moins un aimant permanent en terre rares.

Bien entendu un des ensemble magnétique peut comporter au moins un aimant permanent en terre rare et l'autre ensemble magnétique consécutif au moins un aimant permanent en terre rare.

En variante les aimants peuvent être maintenu en place par des éléments de maintien en matériau magnétique et en forme de C comme décrit dans le brevet US 7 420 314. Cet élément de maintien peut être en variante en forme d'agrafe.

Selon un second objet visé par la présente invention, un alternateur, notamment de véhicule automobile, est équipé d'un rotor 1 de machine tournante tel que défini suivant l'une des combinaisons qui précède.

L'alternateur peut être réversible et consister en un alterno-démarreur, qui notamment permet de démarrer le moteur thermique du véhicule. Ainsi qu'on le sait le rotor à griffes d'un alternateur comporte 6 à 8 griffes et donc 6 à 8 pôles par roue polaire.

Pour mémoire on rappellera que les alternateurs pour véhicule automobile conventionnels ont un diamètre externe de stator compris entre 110 et 150 mm et un diamètre externe de rotor à griffes compris entre 78 et 112 mm.. La longueur du corps du stator est comprise entre 26 et 42 mm. Ce corps du stator a, pour une bonne puissance de l'alternateur, une longueur supérieure à celle du noyau du rotor à griffes. Pour les alternateurs de plus faible puissance la longueur du noyau du rotor est supérieure à celle du corps du stator. Le rapport du diamètre externe du noyau par rapport au diamètre externe du rotor est compris entre 0, 5 et 0,6. L'épaisseur des flasques des roues 7, 8 est inférieure à la moitié de la longueur du noyau du rotor. L'épaisseur des griffes 9 au niveau de leur extrémité de raccordement aux saillies 19 est globalement égale à l'épaisseur des flasques des roues 7, 8. Pour plus de précisions on se reportera par exemple au document EP 0 881 756.

En se reportant au document EP 1 362 404 on voit que l'on réduit la longueur axiale de chevauchement de l'aimant par rapport aux griffes. La hauteur de la tête de la griffe peut être réduite.

## Revendications

1. Rotor (1) de machine électrique tournante qui comporte deux roues polaires (3,5) comportant une série de griffes (4, 6a, 6b) **d'orientation** axiale de forme globalement trapézoïdale qui s'étendent axialement depuis **une saillie** radiale du bord d'extrémité radiale externe de ladite roue polaire, en direction de l'autre roue polaire, de manière que chaque griffe (4) d'une roue polaire est située dans l'espace (30) existant entre deux griffes (6a, 6b) consécutives de l'autre roue polaire, et qui comporte un ensemble magnétique (20) dans l'espace (30) interpolaire défini entre une première griffe (4) d'une première roue (3) polaire et une seconde griffe (6a) d'une seconde roue (5) polaire, ledit ensemble magnétique (20) comprenant latéralement deux premières faces (22) délimités par des première et seconde extrémités (23, 24) libres, lesdites deux premières faces (22) s'étendant respectivement le long des première et seconde griffes (4, 6a) ; chacune des première et seconde griffes (4,6a) présentant une extrémité de tête de griffe (40) et une face latérale (7) de sorte que la face latérale (7) adjacente est en regard, ladite face latérale (7) comprenant des troisième et quatrième extrémités (8,9) opposées entre lesquelles l'ensemble magnétique (20) est en contact ; lesdites faces latérales (7) de chacune des première et seconde griffes (4, 6a) définissent une diminution de section (60) à partir d'une des extrémités (23, 24) libres dudit ensemble magnétique (20) pour se développer vers une extrémité de tête de griffe (40) suivant une facette latérale (12) ledit rotor étant **caractérisé en ce que** la facette latérale (12) se développe vers l'extrémité de tête (40) parallèlement à la face latérale (7).

2. Rotor (1) selon la revendication 1, **caractérisé en ce qu'**il comporte un second ensemble magnétique (25) dans l'espace (30) interpolaire défini entre la première griffe (4) et une troisième griffe (6b), lesdites deuxième et troisième griffes (6a, 6b) étant deux griffes consécutives de la seconde roue (5) polaire.

3. Rotor (1) selon la revendication 2, **caractérisé en ce que** les deux facettes latérales d'une même griffe sont raccordées par une facette terminale (13) de sorte que l'extrémité de tête de cette griffe (40) définisse une forme sensiblement symétrique.

4. Rotor (1) selon l'une quelconque des revendications précédentes, **caractérisé en ce que** la diminution de section (60) définit un épaulement droit (61) séparant la facette latérale (12) de la face latérale (7).

5. Rotor (1) selon l'une quelconque des revendications précédentes, **caractérisé en ce que** la diminution de section (60) définit un congé de raccordement (62) arrondi entre la facette latérale (12) et la face latérale (7).

6. Rotor (1) selon l'une des revendications 3 à 5, **caractérisé en ce que**, pour une même griffe :
- des prolongements (11) de contour des faces latérales définissent chacun avec le contour de la facette latérale (12) qui lui est directement en regard, deux écarts métriques (A, B) ;
- lesdits prolongements (11) de contour des faces latérales se raccorde suivant une face terminale virtuelle (13a) de largeur métrique C se confondant en partie avec le contour de ladite facette terminale (13) ;
- la somme des deux écarts métriques (A, B) est environ équivalente à un taux (T1) compris entre 15 et 45 % de la valeur de ladite largeur C.

7. Rotor (1) selon l'une quelconque des revendications précédentes, **caractérisé en ce que** la longueur d'une facette latérale (12) est environ équivalente à un taux (T2) compris entre 15 et 45 % d'une longueur de la griffe, définie entre l'extrémité de tête (40) et la base (50) de la griffe et mesurée suivant la direction définie par la facette latérale (12).

8. Rotor (1) selon la revendication 6, **caractérisé en ce que** le taux (T1) est sensiblement égal à 30 %.

9. Rotor (1) selon la revendication 7, **caractérisé en ce que** le taux (T2) est sensiblement égal à 30 %.

10. Rotor (1) selon l'une quelconque des revendications, **caractérisé en ce que** l'ensemble magnétique (20) comprend un aimant (21) en matière terres rares.

11. Alternateur, notamment de véhicule automobile, **caractérisé en ce qu'**il comprend un rotor (1) de machine électrique tournante tel que défini dans l'une des revendications 1 à 10.

## Patentansprüche

1. Rotor (1) einer drehenden elektrischen Maschine, der zwei Polräder (3, 5) umfasst, die eine Reihe von axial ausgerichteten insgesamt trapezförmigen Klauen (4, 6a, 6b) umfassen, die sich axial von einem radialen Vorsprung des radial äußeren Endrands des Polrades aus in Richtung des anderen Polrades erstrecken, so dass jede Klaue (4) eines Polrades in dem Raum (30) gelegen ist, der zwischen zwei aufeinander folgenden Klauen (6a, 6b) des anderen Polrades besteht, und der eine magnetische Anordnung (20) in dem zwischen einer ersten Klaue (4) eines ersten Polrades (3) und einer zweiten Klaue (6a) eines zweiten Polrades (5) definierten interpolaren Raum (30) umfasst, wobei die magnetische Anordnung (20) seitlich zwei erste Flächen (22) umfasst, die durch erste und zweite freie Enden (23, 24) begrenzt werden, wobei sich die beiden ersten Flächen (22) jeweils entlang der ersten und zweiten Klauen (4, 6a) erstrecken;
wobei jede der ersten und zweiten Klauen (4, 6a) ein Klauenkopfende (40) und eine Seitenfläche (7) aufweist, so dass die angrenzende Seitenfläche (7) gegenüberliegt, wobei die Seitenfläche (7) dritte und vierte entgegengesetzte Enden (8, 9) umfasst, zwischen denen die magnetische Anordnung (20) in Kontakt ist;
wobei die Seitenflächen (7) jeder der ersten und zweiten Klauen (4, 6a) eine Querschnittsverminderung (60) ausgehend von einem der freien Enden (23, 24) der magnetischen Anordnung (20) definieren, um sich zu einem Klauenkopfende (40) hin gemäß einer seitlichen Facette (12) zu entwickeln, wobei der Rotor **dadurch gekennzeichnet ist, dass** sich die seitliche Facette (12) zu dem Kopfende (40) hin parallel zu der Seitenfläche (7) entwickelt.

2. Rotor (1) nach Anspruch 1, **dadurch gekennzeichnet, dass** er eine zweite magnetischen Anordnung (25) in dem interpolaren Raum (30) umfasst, der zwischen der ersten Klaue (4) und einer dritten Klaue (6b) definiert ist, wobei die zweiten und dritten Klauen (6a, 6b) zwei aufeinander folgende Klauen des zweiten Polrades (5) sind.

3. Rotor (1) nach Anspruch 2, **dadurch gekennzeichnet, dass** die beiden seitlichen Facetten derselben Klaue durch eine Endfacette (13) verbunden sind, so dass das Kopfende dieser Klaue (40) eine im Wesentlichen symmetrische Form definiert.

4. Rotor (1) nach einem der vorhergehenden Ansprüche, **dadurch gekennzeichnet, dass** die Querschnittsverminderung (60) eine gerade Schulter (61) definiert, welche die seitliche Facette (12) von der Seitenfläche (7) trennt.

5. Rotor (1) nach einem der vorhergehenden Ansprüche, **dadurch gekennzeichnet, dass** die Querschnittsverminderung (60) eine gerundete Übergangshohlkehle (62) zwischen der seitlichen Facette (12) und der Seitenfläche (7) definiert.

6. Rotor (1) nach einem der Ansprüche 3 bis 5, **dadurch gekennzeichnet, dass** bei derselben Klaue:
- Konturverlängerungen (11) der Seitenflächen jeweils mit der Kontur der seitlichen Facette (12), die ihr unmittelbar gegenüberliegt, zwei metrische Abweichungen (A, B) definieren;
- die Konturverlängerungen (11) der Seitenflächen sich gemäß einer virtuellen Endfläche (13a) mit der metrischen Breite C verbinden, die teilweise mit der Kontur der Endfacette (13) zusammenfällt,
- die Summe der beiden metrischen Abweichungen (A, B) in etwa gleichwertig zu einer Rate (T1) zwischen 15 und 45 % des Werts der Breite C ist.

7. Rotor (1) nach einem der vorhergehenden Ansprüche, **dadurch gekennzeichnet, dass** die Länge einer seitlichen Facette (12) in etwa gleichwertig zu einer Rate (T2) zwischen 15 und 45 % einer Länge der Klaue ist, die zwischen dem Kopfende (40) und der Basis (50) der Klaue definiert ist und entlang der durch die seitliche Facette (12) definierten Richtung gemessen wird.

8. Rotor (1) nach Anspruch 6, **dadurch gekennzeichnet, dass** die Rate (T1) im Wesentlichen gleich 30 % ist.

9. Rotor (1) nach Anspruch 7, **dadurch gekennzeichnet, dass** die Rate (T2) im Wesentlichen gleich 30 % ist.

10. Rotor (1) nach einem der Ansprüche, **dadurch gekennzeichnet, dass** die magnetische Anordnung (20) einen Magneten (21) aus seltenen Erden umfasst.

11. Lichtmaschine, insbesondere für ein Kraftfahrzeug, **dadurch gekennzeichnet, dass** sie einen Rotor (1) für eine drehende elektrische Maschine wie in einem der Ansprüche 1 bis 10 definiert umfasst.

## Claims

1. Rotor (1) of a rotary electric machine which has two pole wheels (3, 5) having a series of axially oriented claws (4, 61, 6b) of trapezoidal overall shape that extend axially from a radial protrusion from the external radial end edge of said pole wheel, in the direction of the other pole wheel, such that each claw (4) of a pole wheel is situated in the space (30) that exists between two consecutive claws (6a, 6b) of the other pole wheel, and which has a magnetic assembly (20) in the inter-pole space (30) defined between a first claw (4) of a first pole wheel (3) and a second claw (6a) of a second pole wheel (5), said magnetic assembly (20) laterally comprising two first faces (22) delimited by first and second free ends (23, 24), said two first faces (22) extending respectively along the first and second claws (4, 6a); each of the first and second claws (4, 6a) having a claw-head end (40) and a lateral face (7) such that the adjacent lateral face (7) is opposite, said lateral face (7) comprising opposite third and fourth ends (8 9) between which the magnetic assembly (20) is in contact; said lateral faces (7) of each of the first and second claws (4, 6a) defining a reduction in section (60) from one of the free ends (23, 24) of said magnetic assembly (20) so as to extend towards a claw-head end (40) along a lateral facet (12), said rotor being **characterized in that** the lateral facet (12) extends towards the head end (40) parallel to the lateral face (7).

2. Rotor (1) according to Claim 1, **characterized in that** it has a second magnetic assembly (25) in the inter-pole space (30) defined between the first claw (4) and a third claw (6b), said second and third claws (6a, 6b) being two consecutive claws of the second pole wheel (5).

3. Rotor (1) according to Claim 2, **characterized in that** the two lateral facets of one and the same claw are connected by an end facet (13) such that the head end of this claw (40) defines a substantially symmetric shape.

4. Rotor (1) according to any one of the preceding claims, **characterized in that** the reduction in section (60) defines a straight shoulder (61) separating the lateral facet (12) from the lateral face (7).

5. Rotor (1) according to any one of the preceding claims, **characterized in that** the reduction in section (60) defines a rounded fillet (62) between the lateral facet (12) and the lateral face (7).

6. Rotor (1) according to one of Claims 3 to 5, **characterized in that**, for one and the same claw:
- contour extensions (11) of the lateral faces each define, with the contour of the directly opposite lateral face (12), two metric deviations (A, B);
- said contour extensions (11) of the lateral faces are linked along a virtual terminal face (13a) of metric width C that coincides in part with the contour of said terminal facet (13);
- the sum of the two metric deviations (A, B) is approximately equivalent to a proportion (T1) of between 15 and 45% of the value of said width C.

7. Rotor (1) according to any one of the preceding claims, **characterized in that** the length of a lateral facet (12) is approximately equivalent to a proportion (T2) of between 15 and 45% of a length of the claw, defined between the head end (40) and the base (50) of the claw and measured in the direction defined by the lateral facet (12).

8. Rotor (1) according to Claim 6, **characterized in that** the proportion (T1) is substantially equal to 30%.

9. Rotor (1) according to Claim 7, **characterized in that** the proportion (T2) is substantially equal to 30%.

10. Rotor (1) according to any one of the claims, **characterized in that** the magnetic assembly (20) comprises a magnet (21) made of rare earth materials.

11. Alternator, in particular of a motor vehicle, **characterized in that** it comprises a rotary electric machine rotor (1) as defined in one of Claims 1 to 10.
